# EUROPEAN PATENT SPECIFICATION

(11) **EP 4 071 622 B1**
(45) Date of publication and mention of the grant of the patent: **27.03.2024**
(21) Application number: 19956558.1
(22) Date of filing: 19.12.2019
(51) Int. Cl.: G06F 12/06, G06F 12/02

(54) **STORAGE SYSTEM AND DATA CROSSING METHOD**
SPEICHERSYSTEM UND DATENKREUZUNGSVERFAHREN
SYSTÈME DE STOCKAGE ET PROCÉDÉ DE CROISEMENT DE DONNÉES

(43) Date of publication of application: 12.10.2022
(73) Proprietor: Huawei Technologies Co., Ltd., Shenzhen, Guangdong 518129 (CN)
(72) Inventor: HU, Zewen, Shenzhen, Guangdong 518129 (CN); LIAO, Jinqiu, Shenzhen, Guangdong 518129 (CN)
(74) Representative: Maiwald GmbH
(86) International application number: PCT/CN2019/126777
(87) International publication number: WO 2021/120132

(56) References cited:
- CN-A- 1 783 035
- CN-A- 1 797 378
- CN-A- 101 799 745
- CN-A- 104 871 246
- CN-A- 105 005 533
- JP-A- H0 222 938
- US-A1- 2003 026 287
- US-A1- 2012 185 667
- US-B1- 9 946 471

## Description

### TECHNICAL FIELD

This application relates to the field of optical transport network technologies, and in particular, to a storage system and a data converging method.

### BACKGROUND

JPH0222938A describes that a MAP RAM1 is divided into two areas A and B, and a switching register for the switching of the areas A and B is provided. It is described that the access areas A and B can be switched by an electrical characteristic written on the switching register. It is described that data in the area A is outputted and is written on the area B by setting the polarity of the switching register, and the data in the area B is outputted and is written on the area A by changing the polarity of the register.

With rapid development of data services, new requirements are imposed on optical transport networks (OTNs) of operators. The OTNs are required to provide massive bandwidth that adapts to such growth, perform faster and more flexible service grooming, and provide comprehensive and convenient network maintenance and management, to meet service requirements. Based on multiplexing and converging functions of optical channel data units (ODUs), an OTN device can convert low-rate small-granularity ODU service data into high-rate large-granularity ODU service data. In this way, flexible grooming and protection of large-granularity data are implemented. A high-rate convergence granularity has higher converging efficiency, so that the OTN device can implement a larger converging and connecting capability, to reduce costs of the OTN device.

In an OTN device in the conventional technology, a register bank is usually used to buffer to-be-converged data. Finally, converged data is output. However, as OTN transport service bandwidth continuously increases, a solution in which the register bank is used to buffer to-be-converged data requires an increasing quantity of register banks. In this case, more area resources are consumed. In addition, when the to-be-converged data is converged, a large quantity of selection devices (MUXs) and physical connections are introduced. As a result, physical congestion is caused, and physical implementation problems exist, and a scenario with a larger multiplexing and converging capacity cannot be adapted to.

### SUMMARY

This application provides a storage system and a data converging method, to solve a problem of physical line congestion in a data converging process in the conventional technology. This is applicable to a scenario with a larger multiplexing and converging capacity.

To achieve the foregoing objective, the following technical solutions are used in embodiments of this application.

Appended claim 1 defines a storage system. Appended claim 8 defines a data converging method. Appended claim 15 defines a computer-readable storage medium. The invention and its scope of protection is defined by these independent claims. The following aspects and implementations of the disclosure provide examples of combinations of technical subject matters.

According to a first aspect, a storage system is provided. The storage system includes control logic, and a write control interface and a read control interface that are coupled to a memory. A storage area in the memory includes a first page and a second page. The control logic is configured to: set the first page to write-only and the second page to read-only; in specified slots, write data to the first page through the write control interface, and read data from the second page through the read control interface; set the first page to read-only and the second page to write-only when a quantity of the specified slots reaches a preset quantity of slots; and in specified slots of a next round, read data from the first page through the read control interface, and write data to the second page through the write control interface.

In the foregoing technical solution, the first page and the second page are separately set to read-only or write-only in a ping-pong manner, data is written, in the specified slots through the write control interface, to a page set to write-only, and data on a page set to read-only is read through the read control interface. In this way, data is converged by using the first page and the second page in the ping-pong manner. In this method compared with the conventional technology of buffering by using a register bank, selection devices and physical connections are greatly reduced, to solve a problem of physical congestion in the conventional technology. This can further be applied to a scenario with a larger multiplexing and converging capacity.

In a possible implementation of the first aspect, depths of the first page and the second page are equal. In the possible implementation, an amount of the data written in the specified slots is consistent with an amount of the data read in the specified slots. The depths of the first page and the second page are equal. In this case, when the first page and the second page are set to read-only or write-only, both the first page and the second page can support the amount of the data written in the specified slots and the amount of the data read in the specified slots. This avoids a waste of page storage space caused by unequal capacities of the first page and the second page.

In a possible implementation of the first aspect, the depths of the first page and the second page are equal to the preset quantity of slots. In the possible implementation, when the quantity of specified slots reaches the preset quantity of slots, an amount of written data is consistent with an amount of read data, and storage space of each page needs to be greater than or equal to the data amount. When the depths of the first page and the second page are equal to the preset quantity of slots, storage space of the first page and the second page can be reduced to a greatest extent, so that storage space of the memory is saved.

In a possible implementation of the first aspect, the control logic is further configured to set the storage area in the memory. The storage area includes the first page and the second page. In the possible implementation, the control logic may flexibly set the storage space of the first page and the second page based on an actual requirement, so that the first page and the second page can meet requirements for different converging capacities. This improves performance of the storage system.

In a possible implementation of the first aspect, for each slot in the specified slots, data that is written to the first page and corresponding to the slot includes N written data units. Before writing data to the first page, the control logic is further configured to determine a first column address and a first row address of each of the N written data units on the first page. The first row addresses of the N written data units are different from each other. Correspondingly, the control logic is specifically configured to write the N written data units to the first page based on the first column address and the first row address of each of the N written data units. In the possible implementation, a simple and effective manner of writing the data to the first page is provided. This manner can effectively avoid a write conflict.

In a possible implementation of the first aspect, for each written data unit, the control logic is further specifically configured to: determine, based on a first configuration relationship, an output slot corresponding to the written data unit, where the first configuration relationship is used for indicating a relationship between each of the N written data units and the output slot; determine the first column address of the written data unit on the first page based on the output slot corresponding to the written data unit, the depth of the first page, and a first page indication; and determine a row address of a storage unit in an idle state of a plurality of storage units that correspond to the first column address corresponding to the written data unit as the first row address corresponding to the written data unit, where the first row addresses of the N written data units are different from each other. In the possible implementation, a manner of determining the first column address and the first row address of each written data unit is provided. In this manner, input data can be continuously written in a time division mode.

In a possible implementation of the first aspect, for each slot in the specified slots, data on the second page corresponding to the slot includes N output data units. Before reading data from the second page, the control logic is further configured to determine a second column address shared by the N output data units on the second page. Correspondingly, the control logic is specifically configured to read the N output data units from the second page based on the second column address. In the possible implementation, in the provided manner, data can be continuously read in the time division mode.

In a possible implementation of the first aspect, the control logic is further specifically configured to: determine, based on a column address of data read in a previous slot of the slot and a second page indication, the second column address shared by the N output data units on the second page. In the possible implementation, a simple and effective manner of determining the second column address is provided.

In a possible implementation of the first aspect, the control logic is further configured to: determine location information of the N output data units based on a second configuration relationship, where the location information is used for indicating an output sequence of the N output data units, and the second configuration relationship is used for indicating an output sequence of N output data units corresponding to a same slot; and sort the read N output data units based on the location information, and output the sorted N output data units. In the possible implementation, when the control logic outputs N output data units in each slot, the N output data units may be sorted based on an actual requirement and then output, to implement sequential output of data units.

In a possible implementation of the first aspect, the storage area includes at least 2N-1 RAM blocks, and the first page and the second page each occupy half of the 2N-1 RAM blocks. For example, the first page occupies a high address area of the 2N-1 RAM blocks, and the second page occupies a low address area of the 2N-1 RAM blocks. In the possible implementation, written data corresponding to each slot includes N data units, a maximum quantity of write conflicts between N data units in a same slot is N-1, and a maximum quantity of write conflicts between N data units sharing a same column address in different slots is N-1. When the storage area includes at least 2N-1 RAM blocks, the write conflict can be effectively avoided, and data convergence is implemented by using a minimum quantity of RAM blocks.

In a possible implementation of the first aspect, a data bit width of each storage unit in the memory is greater than or equal to a data bit width of a data unit. In the possible implementation, when the data bit width of each storage unit is equal to the data bit width of the data unit, each data unit exactly occupies one storage unit. When the data bit width of each storage unit is greater than the data bit width of the data unit, other information such as location information of the data unit may also be stored in the storage unit.

According to a second aspect, a data converging method is provided, and is applied to a storage system. The storage system includes control logic, and a write control interface and a read control interface that are coupled to a memory. A storage area in the memory includes a first page and a second page. The method includes: setting the first page to write-only and the second page to read-only; in specified slots, writing data to the first page through the write control interface, and reading data from the second page through the read control interface; setting the first page to read-only and the second page to write-only when a quantity of the specified slots reaches a preset quantity of slots; and in specified slots of a next round, reading data from the first page through the read control interface, and writing data to the second page through the write control interface.

In a possible implementation of the second aspect, depths of the first page and the second page are equal.

In a possible implementation of the second aspect, the depths of the first page and the second page are equal to the preset quantity of slots.

In a possible implementation of the second aspect, the method further includes: setting the storage area in the memory. The storage area includes the first page and the second page.

In a possible implementation of the second aspect, for each slot in the specified slots, data that is written to the first page and corresponding to the slot includes N written data units. Before the writing data to the first page, the method further includes: determining a first column address and a first row address of each of the N written data units on the first page. The first row addresses of the N written data units are different from each other. Because only one data unit can be written to one RAM block in one clock cycle, row addresses are different from each other. Correspondingly, the writing data to the first page specifically includes: writing the N written data units to the first page based on the first column address and the first row address of each of the N written data units.

In a possible implementation of the second aspect, the determining a first column address and a first row address of each of the N written data units on the first page includes: for each written data unit, determining, based on a first configuration relationship, an output slot corresponding to the written data unit, where the first configuration relationship is used for indicating a relationship between each of the N written data units and the output slot; determining the first column address of the written data unit on the first page based on the output slot corresponding to the written data unit, the depth of the first page, and a first page indication; and determining a row address of a storage unit in an idle state of a plurality of storage units that correspond to the first column address corresponding to the written data unit as the first row address corresponding to the written data unit, where the first row addresses of the N written data units are different from each other.

In a possible implementation of the second aspect, for each slot in the specified slots, data on the second page corresponding to the slot includes N output data units. Before the reading data from the second page, the method further includes: determining a second column address shared by the N output data units on the second page. Correspondingly, the reading data from the second page includes: reading the N output data units from the second page based on the second column address.

In a possible implementation of the second aspect, the determining a second column address shared by the N output data units on the second page includes: determining, based on a column address of data read in a previous slot of the slot and a second page indication, the second column address shared by the N output data units on the second page.

In a possible implementation of the second aspect, the method further includes: determining location information of the N output data units based on a second configuration relationship, where the location information is used for indicating an output sequence of the N output data units, and the second configuration relationship is used for indicating an output sequence of N output data units corresponding to a same slot; and sorting the read N output data units based on the location information, and outputting the sorted N output data units.

In a possible implementation of the second aspect, the storage area includes at least 2N-1 RAM blocks, and the first page and the second page each occupy half of the 2N-1 RAM blocks. For example, the first page occupies a high address area of the 2N-1 RAM blocks, and the second page occupies a low address area of the 2N-1 RAM blocks.

In a possible implementation of the second aspect, a data bit width of each storage unit in the memory is greater than or equal to a data bit width of a data unit.

It may be understood that any one of the provided storage system-based data converging methods, computer storage media, or computer program products is applied to the storage system provided above. Therefore, for beneficial effects that can be achieved by the data converging methods, computer storage media, or computer program products, refer to beneficial effects in the corresponding storage system provided above. Details are not described herein again.

### BRIEF DESCRIPTION OF DRAWINGS

FIG. 1 is a schematic diagram of a structure of a storage system according to an embodiment of this application;
FIG. 2 is a schematic flowchart of a data converging method according to an embodiment of this application;
FIG. 3 is a schematic diagram of a first page and a second page according to an embodiment of this application;
FIG. 4 is a schematic diagram of using a first page and a second page according to an embodiment of this application;
FIG. 5 is another schematic diagram of using a first page and a second page according to an embodiment of this application;
FIG. 6 is a schematic diagram of a structure of control logic according to an embodiment of this application;
FIG. 7 is a schematic diagram of a structure of other control logic according to an embodiment of this application;
FIG. 8 is a schematic diagram of a structure of an ODUCn frame according to an embodiment of this application; and
FIG. 9 is a schematic diagram of a converging matrix according to an embodiment of this application.

### DESCRIPTION OF EMBODIMENTS

In this application, "at least one" means one or more, and "a plurality of" means two or more. The term "and/or" describes an association relationship for describing associated objects and represents that three relationships may exist. For example, A and/or B may indicate the following cases: Only A exists, both A and B exist, and only B exists, where A and B may be singular or plural. The term "at least one of the following items (pieces)" or a similar expression thereof means any combination of these items, including any combination of singular items (pieces) or plural items (pieces). For example, at least one item (piece) of a, b, or c may represent a, b, c, a and b, a and c, b and c, or a, b, and c, where a, b, and c each may be singular or plural. In addition, in embodiments of this application, the terms such as "first" and "second" are not intended to limit a quantity or an execution sequence.

It should be noted that, in this application, words such as "example" or "for example" are used to represent giving an example, an illustration, or a description. Any embodiment or design scheme described as "example" or "for example" in this application should not be explained as being more preferred or having more advantages than another embodiment or design solution. Specifically, use of the word such as "example" or "for example" is intended to present a related concept in a specific manner. "Coupling" in this application may be understood as a direct connection or an indirect connection. For example, coupling A and B may represent that A is directly connected to B, or that A is indirectly connected to B.

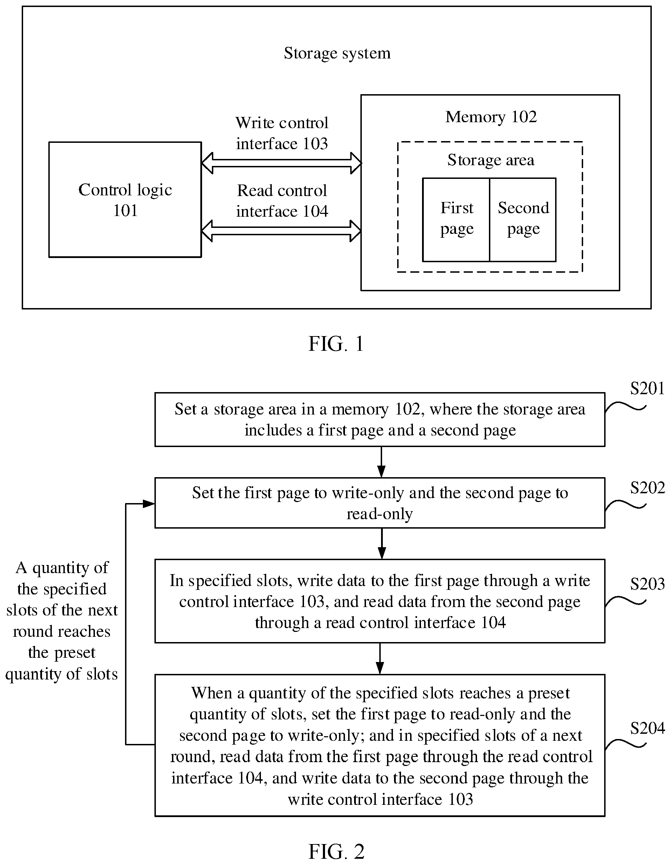

FIG. 1 is a schematic diagram of a structure of a storage system according to an embodiment of this application. The storage system includes control logic 101, and a write control interface 103 and a read control interface 104 that are coupled to a memory 102. The write control interface 103 may be a write interface, and the read control interface 104 may be a read interface. The memory 102 may be located in the storage system, or may be located outside the storage system. In FIG. 1, an example in which the memory 102 is located in the storage system is used for description.

The control logic 101 may be configured to: control access (including read control, write control, and the like) to the memory 102, manage storage space of the memory 102, and the like. For example, the control logic 101 may be configured to set a storage area in the memory 102. The storage area may include a first page and a second page. The control logic 101 may further set reading and writing of the first page and the second page, allocate a storage address to written data or obtain a storage address of data stored in the memory 102, and the like.

Optionally, the control logic 101 in the storage system may be a component such as a processor or a controller, or may be a software program in a processor, or may be a combination of a processor, a controller, and/or a software program. When the control logic 101 is a processor or a software program in a processor, the control logic 101 and the memory 102 may be chips independent of each other. When the control logic 101 is a controller, the control logic 101 and the memory 102 may be integrated together, or may be chips independent of each other. In actual application, the processor may be a central processing unit, a general-purpose processor, a digital signal processor, a neural network processor, an application-specific integrated circuit, a field programmable gate array or another programmable logic device, a transistor logic device, a hardware component, or any combination thereof. The controller may be a memory controller or the like.

According to the storage system shown in FIG. 1, an embodiment of this application provides a data converging method. As shown in FIG. 2, the method may include the following steps.

S201: Control logic 101 sets a storage area in a memory 102, where the storage area includes a first page and a second page.

The memory 102 may be a memory having a read/write function. For example, the memory 102 may be a random access memory (RAM). The RAM may include at least one read interface and at least one write interface. When there is only one read interface and one write interface, the RAM may be referred to as a two-port RAM (TPRAM). The storage area may refer to all storage areas corresponding to the memory 102, or a part of storage areas corresponding to the memory 102. In the storage area, the first page and the second page each may occupy consecutive storage space, or certainly may occupy inconsecutive storage space. In embodiments of this application, an example in which the first page and the second page each occupy consecutive storage space is used for description. In addition, depths of the first page and the second page may be the same. Certainly, the depths of the first page and the second page may alternatively be different provided that specific depths of the first page and the second page meet a subsequent usage requirement.

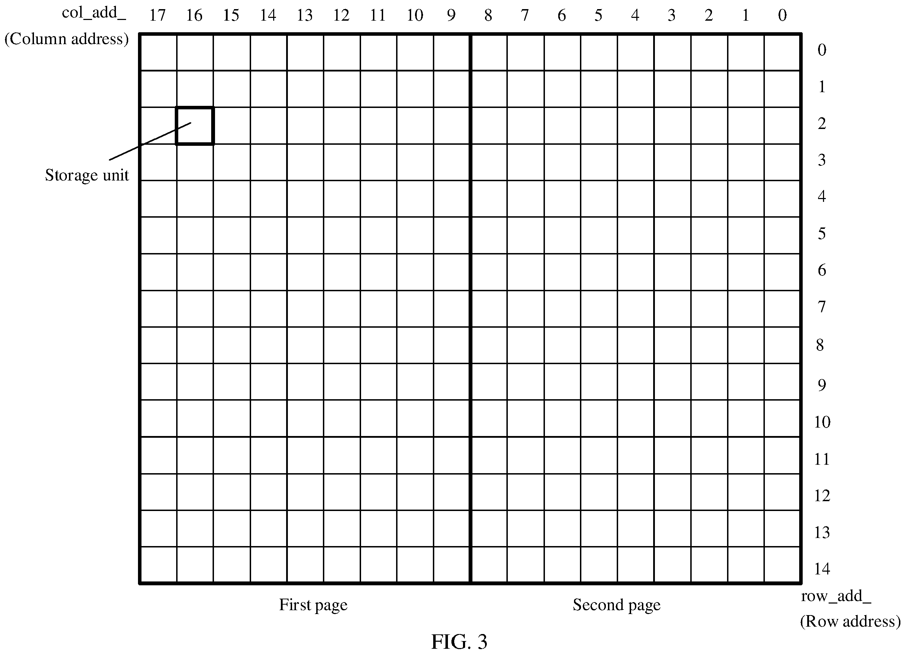

For example, the storage area includes 15 RAM blocks, a depth of each RAM block is 18, and the depths of the first page and the second page are the same and equal to 9. In this case, the storage area may be shown in FIG. 3. In FIG. 3, if an address corresponding to a depth of each RAM block is used as a column address of the storage area, the column address ranges from col_add_0 to col_add_17. If an address corresponding to each of the 15 RAM blocks is used as a row address of the storage area, the row address ranges from row_add_0 to row_add_14. Each small square in FIG. 3 may be referred to as a storage unit, and each storage unit may correspond to one row address and one column address.

It should be noted that FIG. 3 is described by using an example in which the first page occupies a high address range (that is, column addresses occupied by the first page range from col_add_9 to col_add_17) in the column addresses, and the second page occupies a low address range (that is, column addresses occupied by the second page range from col_add_0 to col_add_8) in the column addresses. Certainly, the first page may alternatively occupy the low address range in the column addresses, and the second page may alternatively occupy the high address area in the column addresses. This is not specifically limited in embodiments of this application.

S202: The control logic 101 sets the first page to write-only and the second page to read-only.

Reading and writing of the first page and the second page may be set by the control logic 101. When the first page is set to write-only, data can only be written to the first page. When the second page is set to read-only, data can only be read from the second page.

S203: In specified slots, the control logic 101 writes data to the first page through a write control interface 103, and reads data from the second page through a read control interface 104.

The specified slots may be a plurality of consecutive slots or a plurality of discrete slots. In a data converging process, to-be-converged data is input in a time division mode. Herein, the data written by the control logic 101 to the first page in the specified slots is to-be-converged data input in the time division mode. In addition, converged data is output in the time division mode. Herein, the data read by the control logic 101 from the second page in the specified slots is the converged data output in the time division mode. A process of writing the data to the first page in the specified slots is a process of converging the to-be-converged data input in the time division mode.

For each slot in the specified slots, data that is written to the first page and corresponding to the slot may be referred to as one beat of data. One beat of written data includes N written data units, and N is an integer greater than 1. In each slot in the specified slots, the control logic 101 may write the N written data units to the first page based on a first column address and a first row address of each of the N written data units corresponding to the slot. The control logic 101 writes one beat of data in each slot to the first page. To be specific, the control logic 101 simultaneously writes, to the first page, N written data units in the beat of data corresponding to each slot. The written data unit herein may be understood as a data unit that has been written. Similarly, the output data unit in the following may be understood as a data unit that has been output. Both the written data unit and the output data unit are essentially data units. Concepts of the written data unit and the output data unit introduced in the specification are merely for ease of description and differentiation, and do not constitute a limitation on embodiments of this application.

It should be noted that the first column address and the first row address of each of the N written data units corresponding to each slot may be obtained by the control logic 101 in advance. For a process of obtaining the first column address and the first row address of each of the N written data units, refer to related descriptions in S203a below.

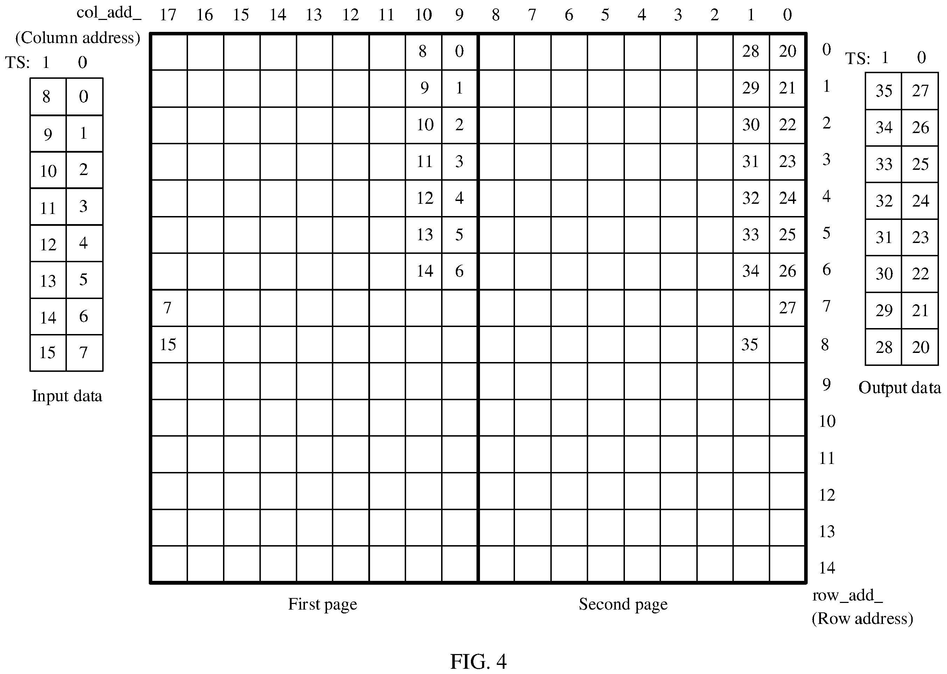

For example, it is assumed that N is equal to 8, the specified slots include two slots TS 0 and TS 1, eight written data units that are written to the first page and corresponding to TS 0 are 0 to 7, and eight written data units that are written to the first page and corresponding to TS 1 are 8 to 15. In this case, data written to the first page in TS 0 and TS 1 may be shown as input data in FIG. 4. The first page shown in FIG. 4 is used as an example. In TS 0, if first column addresses corresponding to written data units 0 to 6 are all col_add_9 and corresponding row addresses are sequentially row_add_0 to row_add_6, and a first column address corresponding to a written data unit 7 is col_add_17 and a corresponding row address is row_add _7, the control logic 101 writes the eight written data units 0 to 7 to the first page. In TS 1, if first column addresses corresponding to written data units 8 to 14 are all col_add_10 and corresponding row addresses are sequentially row_add_0 to row_add_6, and a first column address corresponding to a written data unit 15 is col_add_17 and a corresponding row address is row_add_8, the control logic 101 writes the eight written data units 8 to 15 to the first page. The first page to which the written data units 0 to 7 and 8 to 15 are written may be shown as a first page in FIG. 4.

For each slot in the specified slots, data that is read from the second page and corresponding to the slot may be referred to as one beat of data. One beat of read data includes N output data units. In each slot in the specified slots, the control logic 101 may read, based on a second column address, on the second page, of the N output data units corresponding to the slot, the N output data units corresponding to the slot from the second page. Further, the control logic 101 may further sort the N output data units based on location information and then output the sorted N output data units. The N output data units corresponding to each slot share one second column address on the second page, and the location information corresponding to the N output data units is used for indicating an output sequence of the N output data units. The control logic 101 reads one beat of data in each slot from the second page. To be specific, the control logic 101 simultaneously reads the N output data units corresponding to each slot.

It should be noted that the second column address of the N output data units corresponding to each slot on the second page and the location information may be obtained by the control logic 101 in advance. For a process of obtaining the second column address and the location information, refer to related descriptions in S203b below.

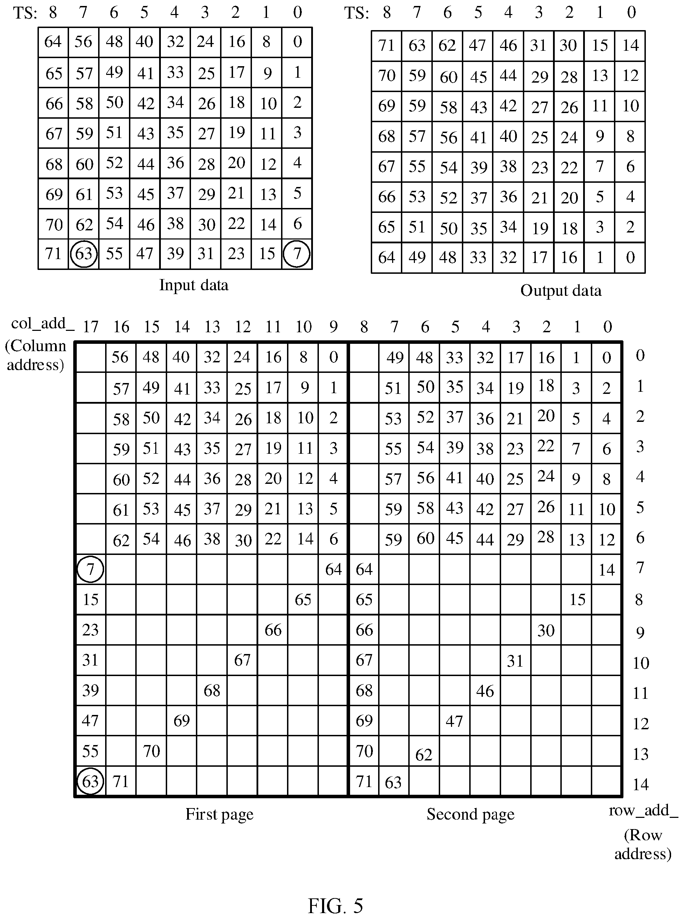

The second page shown in FIG. 5 is used as an example. It is assumed that N is equal to 8, the specified slots include two slots TS 0 and TS 1, eight output data units corresponding to TS 0 are 0, 2, 4, 6, 8, 10, 12, and 14 and share a second column address of col_add_0 on the second page, and eight output data units corresponding to TS 1 are 1, 3, 5, 7, 9, 11, 13, and 15 and share a second column address of col add_1 on the second page. In this case, the second page may be shown as a second page in FIG. 5. If a sequence indicated by location information of the eight output data units corresponding to TS 0 is 14, 12, 10, 8, 6, 4, 2, and 0, in TS 0, the control logic 101 may read 0, 2, 4, 6, 8, 10, 12, and 14 from the second page based on col_add_0, sort them into 14, 12, 10, 8, 6, 4, 2, and 0, and output them. If a sequence indicated by location information of the eight output data units corresponding to TS 1 is 15, 13, 11, 9, 7, 5, 3, and 1, in TS 1, the control logic 101 may read 1, 3, 5, 7, 9, 11, 13, and 15 from the second page based on col add_1, sort them into 15, 13, 11, 9, 7, 5, 3, and 1, and output them. For results sorted and output by the control logic 101 in TS 0 and TS 1, refer to output data in FIG. 5.

It should be noted that only TS 0 and TS 1 are used as an example for description in FIG. 5, and the specified slots may include more slots. Examples are not described one by one in embodiments of this application. In addition, after the control logic 101 sets the second page to read-only, if the second page has no stored data (for example, when the second page is used for the first time and is set to read-only) or is cleared, the control logic 101 may only write data to the first page in the specified slots, and does not read data from the second page.

In addition, the written data unit and the output data unit are merely intended to facilitate description of written data and read data. There is no essential difference between the written data unit and the output data unit, and both may be referred to as data units. Similarly, similar descriptions such as the first column address, the first row address, and the second column address are merely intended to facilitate description of a storage address of the written data and a storage address of the read data. The following descriptions about the written data unit and the output data unit may be understood in the same way, and the first column address, the first row address, and the second column address may be understood in the same way.

S204: When a quantity of the specified slots reaches a preset quantity of slots, the control logic 101 sets the first page to read-only, and reads data from the first page through the read control interface 104 in specified slots of a next round; and sets the second page to write-only, and writes data to the second page through the write control interface 103 in the specified slots of the next round.

Data read from the first page in each slot may be one beat of data, and the beat of data may include N output data units. Data written to the second page in each slot may also be one beat of data, and the beat of data may include N written data units.

Specifically, when the quantity of the specified slots reaches the preset quantity of slots, the control logic 101 has written data of the preset quantity of slots to the first page. In this case, the control logic 101 sets the first page to read-only, and may read in the next specified slots the data written in the previous specified slots from the first page. In addition, when the quantity of the specified slots reaches the preset quantity of slots, the control logic 101 has read data of the preset quantity of slots from the second page. In this case, the control logic 101 sets the second page to write-only, and may write, to the second page in the specified slots of the next round, data corresponding to the specified slots of the next round. Further, when a quantity of the specified slots of the next round reaches the preset quantity of slots, the control logic 101 may return to S202 to continue execution. In this way, the control logic 101 sets one of the first page and the second page to read-only and the other to write-only in a ping-pong processing manner; and may read data from the second page when data is written to the first page, and read data from the first page when data is written to the second page. This improves data multiplexing efficiency.

Optionally, when the quantity of the specified slots reaches the preset quantity of slots, the control logic 101 may alternatively clear the data on the second page, to write data to the second page in the specified slots of the next round. Similarly, after setting the first page to read-only, and reading data from the first page in the specified slots of the next round, the control logic 101 may alternatively clear the data on the first page.

It should be noted that a process in which the control logic 101 reads the data from the first page in the specified slots of the next round is similar to the process of reading the data from the second page in S203, and a process of writing the data to the second page in the specified slots of the next round is similar to the process of writing the data to the first page in S203. For details, refer to related descriptions in S203. Details are not described again in embodiments of this application.

In addition, the preset quantity of slots may be set in advance by a person skilled in the art based on an actual requirement or may be set by the control logic 101. The preset quantity of slots may be fixed, or vary with different application requirements.

Optionally, the depths of the first page and the second page may be equal to the preset quantity of slots. When the depths of the first page and the second page are equal to the preset quantity of slots, sizes of storage areas occupied by the first page and the second page may be set based on the preset quantity of slots when usage is not affected. This can save storage space of the memory 102.

For example, the depths of the first page and the second page are equal to the preset quantity T of slots, T=9, and N=8. Based on FIG. 4, when the quantity of the specified slots reaches the preset quantity T of slots, the first page and the second page may be shown in FIG. 5. The data written to the first page is represented as input data in FIG. 5. To be specific, data written from TS 0 to TS 8 is sequentially: 0 to 7, 8 to 15, 16 to 23, 24 to 31, 32 to 39, 40 to 47, 48 to 55, 56 to 63, and 64 to 71. The data read from the second page is represented as output data in FIG. 5. To be specific, sorted data read from TS 0 to TS 8 is sequentially: even numbers from 0 to 15 in reverse order, odd numbers from 0 to 15 in reverse order, even numbers from 16 to 31 in reverse order, odd numbers from 16 to 31 in reverse order, even numbers from 32 to 47 in reverse order, odd numbers from 32 to 47 in reverse order, even numbers from 48 to 63 in reverse order, odd numbers from 48 to 63 in reverse order, and 64 to 71 in reverse order.

Further, in S203, for each slot in the specified slots, before the N written data units corresponding to the slot are written to the first page, the method further includes S203a.

S203a: The control logic 101 determines the first column address and the first row address of each of the N written data units on the first page, where the first row addresses of the N written data units are different from each other.

The first page may include a plurality of storage units, and each storage unit may correspond to one first column address and one first row address. Before writing N written data units included in one beat of data to the first page, the control logic 101 may first allocate one storage unit to each of the N written data units, that is, allocate one first row address and one first column address to each written data unit. In this way, when the N written data units are written to the first page, the N written data units may be written to corresponding storage units based on the first row address and the first column address that are allocated to each written data unit.

In addition, the control logic 101 may allocate addresses to the N written data units one by one. To be specific, the control logic 101 allocates an address to only one written data unit in the N written data units each time, and completes address allocation for the N written data units through allocation for N times. The first column addresses allocated by the control logic 101 to the N written data units may be the same or different (specifically related to a configured slot for outputting each written data unit), and the first row addresses allocated to the N written data units are different from each other. Optionally, the control logic 101 may allocate corresponding first row addresses to the N written data units in descending order of the first row addresses.

TS 0 shown in FIG. 5 is used as an example. First column addresses allocated by the control logic 101 to 0 to 6 in eight written data units corresponding to TS 0 are col_add_9, and first row addresses allocated to 0 to 6 are sequentially row_add_0 to row_add_6. A first column address allocated to a written data unit 7 in the eight written data units corresponding to TS 0 is col_add_17, and an allocated first row address is row_add_7.

Specifically, that the control logic 101 determines the first column address of each of the N written data units on the first page may be: for each written data unit, determining, based on a first configuration relationship, an output slot corresponding to the written data unit, where the first configuration relationship is used for indicating a relationship between each of the N written data units and the output slot; and determining the first column address of the written data unit on the first page based on the output slot corresponding to the written data unit, the depth of the first page, and a first page indication.

The output slot corresponding to the written data unit may be a slot for outputting the written data unit. The output slot corresponding to each of the N written data units may be configured in advance. In other words, the first configuration relationship may be configured in advance, so that the output slot corresponding to each of the N written data units may be determined based on the first configuration relationship. For example, N=8, and the first configuration relationship may be used for indicating that output slots corresponding to first seven written data units in eight written data units included in one beat of data are slot_i, and an output slot corresponding to an eighth written data unit is slot_k, where i≠k.

In addition, because column address ranges corresponding to the first page and the second page are different, and the first page and the second page are used in a ping-pong manner, to ensure that the allocated first column address is within the column address range corresponding to the first page or the second page, the first page and the second page each may be indicated by using a page indication. The first page indication indicates the first page, and a second page indication indicates the second page. Optionally, the page indication may be represented by using a one-bit binary number. For example, when the binary number is 1, the page indication is the first page indication, and when the binary number is 0, the page indication is the second page indication.

The column address ranges corresponding to the first page and the second page shown in FIG. 5 are used as an example. The preset quantity T of slots is equal to the depths of the first page and the second page and is equal to 9, the page indication is represented as blk_sel, blk_sel=1 represents the first page indication, and blk_sel=0 represents the second page indication. In this case, when an output slot corresponding to a written data unit is T1, the control logic 101 may determine a first column address of the written data unit on the first page according to a formula col_add_(T1+Txblk_sel). A written data unit 7 of eight written data units corresponding to TS 0 in FIG. 5 is used as an example. An output slot corresponding to the written data unit 7 is T1=8, and a first column address of the written data unit 7 on the first page is col_add_(8+9×1)=col_add_17.

Specifically, that the control logic 101 determines the first row address of each of the N written data units on the first page may be: For each written data unit, the control logic 101 may determine a row address of a storage unit in an idle state in a plurality of storage units that correspond to the first column address corresponding to the written data unit as the first row address of the written data unit. The first row addresses of the N written data units are different from each other.

The eight written data units (namely, 0 to 7) corresponding to TS 0 in FIG. 5 are used as an example. First row addresses allocated by the control logic 101 to 0 to 6 are sequentially row_add_0 to row_add_6. The control logic 101 may allocate, to the written data unit 7, a row address row_add_7 that is of a storage unit in an idle state in a plurality of storage units that correspond to the first column address col_add_17 corresponding to the written data unit 7 and that does not overlap with row_add_0 to row_add_6.

Similarly, in a ping-pong manner of setting the first page and the second page to write-only, if the second page is set to write-only in the specified slots of the next round, that the control logic 101 determines a first column address of each of the N written data units on the second page may be: for each written data unit, determining, based on a first configuration relationship, an output slot corresponding to the written data unit; and determining a first column address of the written data unit on the second page based on the output slot corresponding to the written data unit, the depth of the second page, and the second page indication. Correspondingly, that the control logic 101 determines a first row address of each of the N written data units on the second page may be: For each written data unit, the control logic 101 determines a row address of a storage unit in an idle state in a plurality of storage units that correspond to the first column address corresponding to the written data unit as the first row address of the written data unit. The first row addresses of the N written data units are different from each other.

It should be noted that a specific process in which the first column addresses and the first row addresses, on the second page, of the N written data units corresponding to each slot in the specified slots of the next round are determined before the second page is set to write-only and the data is written to the second page in the specified slots of the next round is similar to related descriptions in S203a. Details are not described herein again in embodiments of this application.

It can be learned from related descriptions in S203a that, when data is written to the first page or the second page, the first row addresses allocated by the control logic 101 to the N written data units corresponding to each slot are different from each other, and a storage unit corresponding to the first row address and the first column address is in an idle state. In this way, a write conflict can be effectively avoided when N written data units in a same slot are simultaneously written to the first page or the second page.

The first page and the second page shown in FIG. 3 is used as an example. Each row address corresponds to one RAM block, each RAM block allows writing of only one written data unit at a time, and a written data unit cannot be written to a storage unit to which another written data unit has been written. Therefore, a write conflict occurs in the following two cases.

Case 1: A maximum quantity of write conflicts between N data units in a same slot is N-1. The write conflict can be effectively avoided by allocating different row addresses to the N data units in the same slot. A last data unit in the N data units in the same slot is used as an example. A maximum quantity of write conflicts between the last data unit and first N-1 data units is N-1. The written data unit 7 corresponding to TS 0 in FIG. 5 is used as an example. A first row address of the written data unit 7 on the first page cannot be the same as first row addresses row_add_0 to row_add_6 corresponding to first seven written data units 0 to 6 corresponding to TS 0. In this case, row_add_7 may be allocated to the written data unit 7.

Case 2: A maximum quantity of write conflicts between N data units sharing a same column address in different slots is N-1. The write conflict can be effectively avoided by allocating a row address of a storage unit in an idle state. Data read in a same slot also includes N data units, and the N data units share one column address. In other words, a plurality of storage units corresponding to one column address can store only N data units. A last data unit in the N data units is used as an example. A maximum quantity of write conflicts between the last data unit and first N-1 data units is N-1. A written data unit 63 corresponding to TS 7 in FIG. 5 is used as an example. In a column address col_add_17, the written data unit 63 cannot have a same row address as row addresses (namely, row_add_7 to row_add_13) corresponding to the six data units previously written (namely, 7, 15, 23, 31, 39, 47, and 55). In this case, row_add_14 may be allocated to the written data unit 63.

Therefore, when data convergence is implemented by using storage structures of the first page and the second page shown in FIG. 5, to completely avoid the foregoing two types of write conflicts, a maximum of 2N-1 RAM blocks may be used for implementation. In the 2N-1 RAM blocks, N-1 RAM blocks are used for resolving the write conflict in Case 1, the other N-1 RAM blocks are used for resolving the write conflict in Case 2, and the last data unit described above is written to the remaining one RAM block.

In S203, for each slot in the specified slots, before the N output data units corresponding to the slot are read from the second page, the method further includes S203b.

S203b: The control logic 101 determines the second column address shared by the N output data units on the second page.

Specifically, for a first slot in the specified slots, the control logic 101 may determine, based on the second page indication, a smallest second column address on the second page as a second column address shared by N output data units corresponding to the first slot on the second page. For each of the other slots in the specified slots, the control logic 101 may determine, in an ascending manner based on a second column address corresponding to a previous slot, a second column address shared by N output data units corresponding to each of the other slots on the second page.

Optionally, the control logic 101 may further determine location information of the N output data units. The location information is used for indicating an output sequence of the N output data units.

Specifically, for each slot in the specified slots, the control logic 101 may determine, based on a second configuration relationship, the location information of the N output data units corresponding to the slot. The second configuration relationship is used for indicating an output sequence of N output data units corresponding to a same slot. The second configuration relationship may be configured in advance. For example, the second configuration relationship may be used for indicating an output bit sequence of each of N output data units included in one beat of data, so that the N output data units may be sorted based on the output bit sequence of each output data unit and then output.

Similarly, in a ping-pong manner of setting the first page and the second page to read-only, if the first page is set to read-only in the specific slots of the next round, in a first slot in the specified slots of the next round, the control logic 101 may determine, based on the first page indication, a smallest second column address on the first page as a second column address shared by N output data units corresponding to the first slot on the first page. For each of the other slots in the specified slots, the control logic 101 may determine, in an ascending manner based on a second column address corresponding to a previous slot, a second column address shared by N output data units corresponding to each of the other slots on the first page. A method for determining location information of N output data units corresponding to each slot in the specified slots of the next round is consistent with that in related descriptions in S203b. Details are not described herein again in embodiments of this application.

Further, a bit width of each data unit in the written data units and the output data units may be equal to or less than a bit width of each storage unit in the memory 102. For example, the bit width of each data unit may be 128 bits, and the bit width of each storage unit in the memory 102 may be greater than or equal to 128 bits.

When the bit width of each data unit is equal to the bit width of each storage unit in the memory 102, the second configuration relationship mentioned above may be stored in a storage area other than the first page or the second page in the memory 102, or stored in a memory other than the memory 102. When the bit width of each data unit is less than the bit width of each storage unit in the memory 102, location information of each data unit in the second configuration relationship may be stored in a corresponding storage unit. For example, if the bit width of each data unit is 128 bits, and the bit width of each storage unit in the memory 102 is 132 bits, 4 bits in the bit width of each storage unit may be used for storing location information corresponding to the data unit stored in the storage unit.

When data convergence is implemented by using the data converging method provided in embodiments of this application, data convergence at different granularities may be implemented by setting a quantity N of data units in a same slot, a preset quantity T of slots, and a bit width W of the data unit.

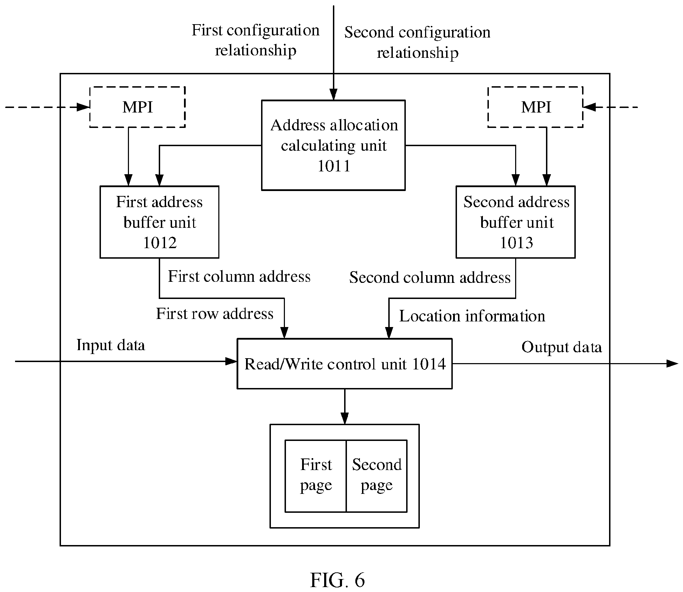

For ease of understanding, the following uses a block diagram of control logic shown in FIG. 6 as an example to describe the technical solutions provided in embodiments of this application. In FIG. 6, control logic 101 includes: an address allocation calculating unit 1011, a first address buffer unit 1012, a second address buffer unit 1013, and a read/write control unit 1014.

The address allocation calculating unit 1011 may be configured to: before data is written to a configured storage area, allocate a first column address and a first row address to the written data based on a first configuration relationship; and before data is read from the configured storage area, determine a second column address and location information for the read data based on a second configuration relationship. The first address buffer unit 1012 is configured to buffer the first column address and the first row address that are allocated by the address allocation calculating unit 1011 to the written data. The second address buffer unit 1013 buffers the second column address and the location information determined by the address allocation calculating unit 1011 for the read data.

Specifically, after the read/write control unit 1014 sets a first page to write-only and a second page to read-only, when data is written to the first page in specified slots, for each slot in the specified slots, the read/write control unit 1014 may obtain, from the first address buffer unit 1012, first column addresses and first row addresses on the first page of N data units corresponding to the slot, and then write the N data units to the first page based on the corresponding first column addresses and first row addresses. When data on the second page is read in the specified slots, for each slot in the specified slots, the read/write control unit 1014 may obtain, from the second address buffer unit 1013, a second column address and location information of N data units corresponding to the slot on the second page, read the N data units corresponding to the slot from the second page based on the second column address, sort the N data units based on the location information, and output the sorted N data units.

Similarly, after setting the first page to read-only and the second page to write-only when a quantity of the specified slots reaches a preset quantity of slots, the control logic 101 may read data from the first page and write data to the second page in specified slots of a next round in a manner similar to the foregoing manner.

Optionally, the address allocation calculating unit 1011 may be implemented by using software. To be specific, the software allocates a first column address and a first row address to written data before the data is written to a configured storage area, and determines a second column address and location information for read data before the data is read from a configured storage area. Further, the software may further buffer the allocated first column address and first row address in the first address buffer unit 1012 through a message passing interface (MPI), and buffer the allocated second column address and the location information in the second address buffer unit 1013 through an MPI.

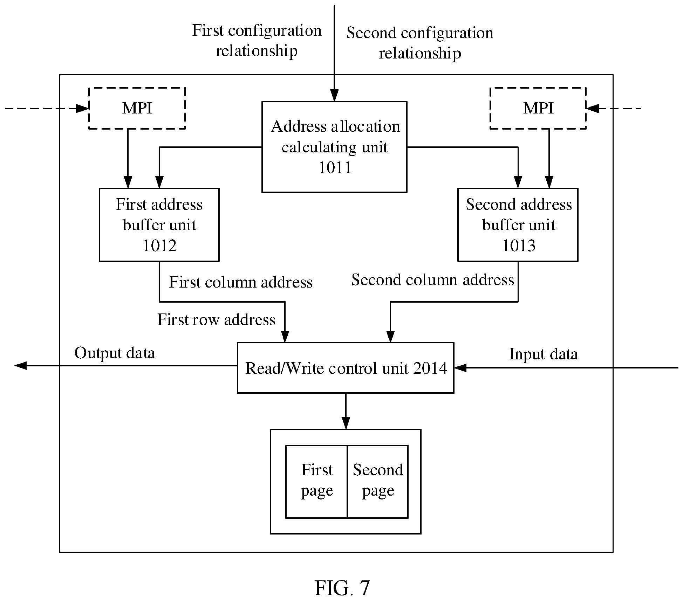

Further, by converting read/write control in FIG. 6, the block diagram of the control logic shown in FIG. 6 may be further used for diverging data. As shown in FIG. 7, in a diverging process, a read address (namely, the second column address) in FIG. 6 may be used as a write address for diverging, and the output converged data is written to a storage area. A write address (namely, the first column address and the first row address) in FIG. 6 is used as a read address for diverging, and data is read from a storage area, to complete the data diverging process. A read/write control unit 1014 in FIG. 6 is replaced with a read/write control unit 2014.

Specifically, after the read/write control unit 2014 sets the second page to write-only and the first page to read-only, when the data (namely, the converged data) is written to the second page in the specified slots, for each slot in the specified slots, the read/write control unit 2014 may obtain, from the second address buffer unit 1013, the second column address of the N data units corresponding to the slot on the second page, and then write the N data units to the second page based on the second column address. When the data on the first page is read in the specified slots, for each slot in the specified slot, the read/write control unit 2014 may obtain, from the first address buffer unit 1012, the first column addresses and the first row addresses on the first page of the N data units corresponding to the slot, and then read the N data units from the first page based on the corresponding first column addresses and the first row addresses.

Similarly, after setting the second page to read-only and the first page to write-only when a quantity of the specified slots reaches a preset quantity of slots, the control logic 101 may read data from the second page and write data to the first page in specified slots of a next round in a manner similar to the foregoing manner.

In a possible implementation, the data converging method provided in embodiments of this application may be applied to data multiplexing. Specifically, data mapped from a low-order optical channel data unit (ODU) frame may be multiplexed into a higher-order ODU frame. For example, by using the data converging method provided in this application, data mapped from low-order ODU frames of a plurality of service channels and input in a time division mode may be interleaved at a granularity of 16 bytes based on a multiplexing slot, and may be multiplexed into a higher-order ODUCn frame. When the data converging method provided in this application is applied to a data multiplexing process, data written in specified slots may be the data mapped from the lower-order ODU frame, and the written data is to-be-multiplexed data. Data output in the specified slots may be the higher-order ODU frame, that is, the output data is multiplexed data.

It should be noted that the lower-order ODU frame may be a low-rate ODU frame, and the higher-order ODU frame may be a high-rate ODU frame. For specific related descriptions of the lower-order ODU frame and the higher-order ODU frame, refer to related descriptions in the G.709 protocol. Details are not specifically described herein again in embodiments of this application.

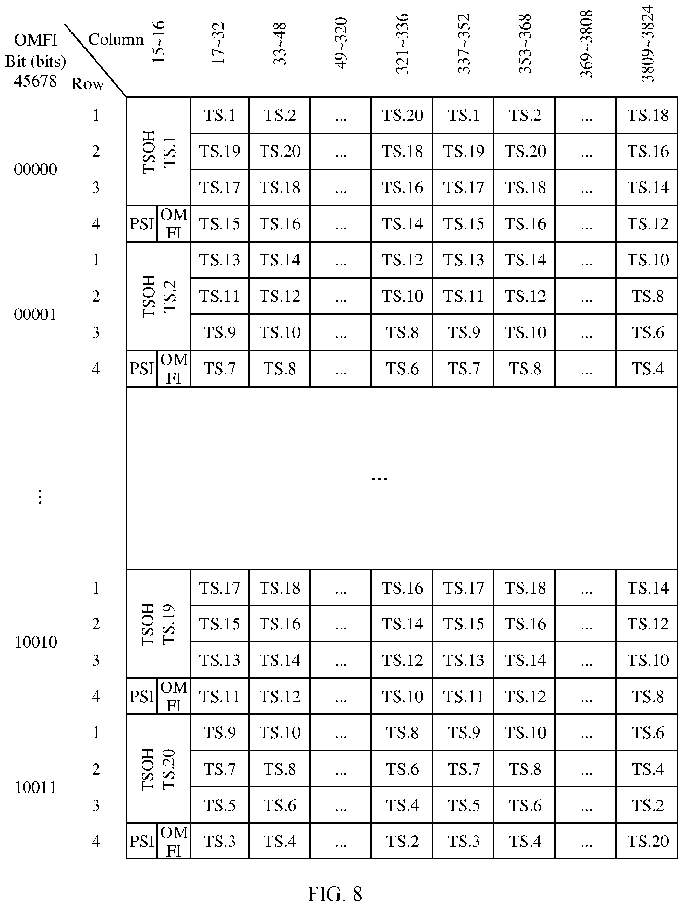

For example, FIG. 8 is a schematic diagram of a structure of a 100 GB ODUCn frame according to an embodiment of this application. The ODU frame includes 20 5G multiplexing slots in total from TS. 1 to TS.20, each multiplexing slot is at a granularity of 16 bytes, and the 20 5G multiplexing slots are arranged in a payload area of the ODUCn frame in a cyclic interleaved manner. FIG. 8 shows an OPUCn tributary slot, OPU multi-frame indicator (OMFI) and tributary slot overheads (TSOH). Further, a plurality of 100 GB ODUCn frames may form a group (GID), including n*20 5G multiplexing slots, where n is an integer greater than 1.

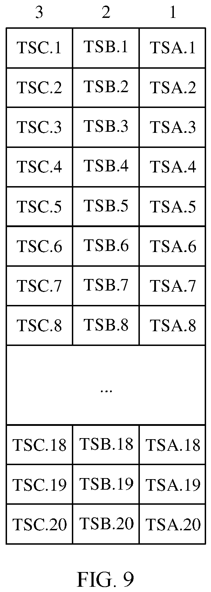

When data multiplexing is implemented by using the method provided in this application, to-be-multiplexed data may be multiplexed to ODUCn frames in one service channel, or may be multiplexed to ODUCn frames in a plurality of different service channels in a same group (GID). In other words, input data is converged in outputting ODUCn frames in one or more service channels in a same group (GID). For example, when to-be-multiplexed data is multiplexed to ODUCn frames in three different service channels in a same group (GID), TSA. 1 to TSA.20 represent multiplexed data corresponding to 20 slots included in each ODUCn frame in a first service channel, TSB. 1 to TSB.20 represent multiplexed data corresponding to 20 slots included in each ODUCn frame in a second service channel, TSC.1 to TSC.20 represent multiplexed data corresponding to 20 slots included in each ODUCn frame in a third service channel. In this case, multiplexed data formed by one ODUCn frame in each service channel may be shown in FIG. 9, and the multiplexed data may be referred to as a converging matrix.

In embodiments of this application, a first page and a second page are separately set to read-only or write-only in a ping-pong manner, data is written, in specified slots through a write control interface, to a page set to write-only, and data on a page set to read-only is read through a read control interface. In this way, data is converged by using the first page and the second page in the ping-pong manner. In this method compared with the conventional technology, selection devices and physical connections can be greatly reduced, to solve a problem of physical congestion in the conventional technology. This can further be applied to a scenario with a larger multiplexing and converging capacity.

An embodiment of this application provides a storage system. As shown in FIG. 1, the storage system may include control logic 101, and a write control interface 103 and a read control interface 104 that are coupled to a memory 102. A storage area in the memory 102 includes a first page and a second page.

In this embodiment of this application, the control logic 101 is configured to: set the first page to write-only and the second page to read-only; in specified slots, write data to the first page through the write control interface 103, and read data from the second page through the read control interface 104; set the first page to read-only and the second page to write-only when a quantity of the specified slots reaches a preset quantity of slots; and in specified slots of a next round, read data from the first page through the read control interface 104, and write data to the second page through the write control interface 103.

Optionally, depths of the first page and the second page are equal, and/or the depths of the first page and the second page are equal to the preset quantity of slots.

Further, the control logic 101 is further configured to: set the storage area in the memory 102. The storage area includes the first page and the second page.

In a possible embodiment, for each slot in the specified slots, data that is written to the first page and corresponding to the slot includes N written data units. Before writing data to the first page, the control logic 101 is further configured to determine a first column address and a first row address of each of the N written data units on the first page. The first row addresses of the N written data units are different from each other. Correspondingly, the control logic 101 is specifically configured to write the N written data units to the first page based on the first column address and the first row address of each of the N written data units.

Optionally, for each written data unit, the control logic 101 is further specifically configured to: determine, based on a first configuration relationship, an output slot corresponding to the written data unit, where the first configuration relationship is used for indicating a relationship between each of the N written data units and the output slot; determine the first column address of the written data unit on the first page based on the output slot corresponding to the written data unit, the depth of the first page, and a first page indication; and determine a row address of a storage unit in an idle state of a plurality of storage units that correspond to the first column address corresponding to the written data unit as the first row address corresponding to the written data unit, where the first row addresses of the N written data units are different from each other.

In another possible embodiment, for each slot in the specified slots, data on the second page corresponding to the slot includes N output data units. Before reading data from the second page, the control logic 101 is further configured to determine a second column address shared by the N output data units on the second page. Correspondingly, the control logic is specifically configured to read the N output data units from the second page based on the second column address. Optionally, the control logic 101 is further specifically configured to: determine, based on a column address of data read in a previous slot of the slot and a second page indication, the second column address shared by the N output data units on the second page.

Further, the control logic 101 is further configured to: determine location information of the N output data units based on a second configuration relationship, where the location information is used for indicating an output sequence of the N output data units, and the second configuration relationship is used for indicating an output sequence of N output data units corresponding to a same slot; and sort the read N output data units based on the location information, and output the sorted N output data units.

Optionally, a data bit width of each storage unit in the memory 102 is greater than or equal to a data bit width of a data unit, and the data unit includes a written data unit or an output data unit.

It should be noted that the storage system is an apparatus embodiment corresponding to the foregoing method embodiment. For specific implementation of the control logic 101, refer to detailed descriptions in the data converging method provided above. Details are not described herein again in embodiments of this application.

In embodiments of this application, control logic 101 separately sets a first page and a second page to read-only or write-only in a ping-pong manner, data is written, in specified slots through a write control interface, to a page set to write-only, and data on a page set to read-only is read through a read control interface. In this way, data is converged by using the first page and the second page in the ping-pong manner. In this method compared with the conventional technology, selection devices and physical connections can be greatly reduced, to solve a problem of physical congestion in the conventional technology. This can further be applied to a scenario with a larger multiplexing and converging capacity.

In another embodiment of this application, a computer-readable storage medium is further provided. The computer-readable storage medium stores instructions. When a device (which may be a single-chip microcomputer, a chip, a processor, or the like) runs the instructions, the device is enabled to perform the data converging method provided above. The computer-readable storage medium may include any medium that can store program code, such as a USB flash drive, a removable hard disk, a read-only memory, a random access memory, a magnetic disk, or an optical disc.

In another embodiment of this application, a computer program product is further provided. The computer program product includes instructions, and the instructions are stored in a computer-readable storage medium. When a device (which may be a single-chip microcomputer, a chip, a processor, or the like) runs the instructions, the device is enabled to perform the data converging method provided above. The computer-readable storage medium may include any medium that can store program code, such as a USB flash drive, a removable hard disk, a read-only memory, a random access memory, a magnetic disk, or an optical disc.

In conclusion, the foregoing description is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A storage system, wherein the storage system comprises control logic(101), and a write control interface (103) and a read control interface (104) that are coupled to a memory(102), a storage area in the memory comprises a first page and a second page, and the control logic is configured to:
set the first page to write-only and the second page to read-only;
in specified slots, write data to the first page through the write control interface, and read data from the second page through the read control interface;
set the first page to read-only and the second page to write-only when a quantity of the specified slots reaches a preset quantity of slots; and
in specified slots of a next round, read data from the first page through the read control interface, and write data to the second page through the write control interface;
wherein for each slot in the specified slots, data that is written to the first page and corresponding to the slot comprises N written data units;
before writing data to the first page, the control logic is further configured to determine a first column address and a first row address of each of the N written data units on the first page, wherein the first row addresses of the N written data units are different from each other; and
correspondingly, the control logic is specifically configured to write the N written data units to the first page based on the first column address and the first row address of each of the N written data units.

2. The storage system according to claim 1, wherein depths of the first page and the second page are equal.

3. The storage system according to claim 2, wherein the depths of the first page and the second page are equal to the preset quantity of slots.

4. The storage system according to any one of claims 1 to 3, wherein the control logic is further configured to:
set the storage area in the memory, wherein the storage area comprises the first page and the second page.

5. The storage system according to any one of claims 2 to 3, wherein the depth of the first page corresponds to a number of first column addresses of a RAM block of the storage area and the depth of the second page corresponds to a number of second column addresses of the RAM block of the storage area.

6. The storage system according to any of claims 1-4, wherein for each written data unit, the control logic is further specifically configured to:
determine, based on a first configuration relationship, an output slot corresponding to the written data unit, wherein the first configuration relationship is used for indicating a relationship between each of the N written data units and the output slot;
determine the first column address of the written data unit on the first page based on the output slot corresponding to the written data unit, the depth of the first page, and a first page indication; and
determine a row address of a storage unit in an idle state of a plurality of storage units that correspond to the first column address corresponding to the written data unit as the first row address corresponding to the written data unit, wherein the first row addresses of the N written data units are different from each other.

7. The storage system according to any one of claims 1 to 4 or 6, wherein for each slot in the specified slots, data on the second page corresponding to the slot comprises N output data units;
before reading data from the second page, the control logic is further configured to determine a second column address shared by the N output data units on the second page; and
correspondingly, the control logic is specifically configured to read the N output data units from the second page based on the second column address.

8. A data converging method, applied to a storage system, wherein the storage system comprises control logic (101) and a write control interface (103) and a read control interface (104) that are coupled to a memory(102), a storage area in the memory comprises a first page and a second page, and the method comprises:
setting the first page to write-only and the second page to read-only;
in specified slots, writing data to the first page through the write control interface, and reading data from the second page through the read control interface;
setting the first page to read-only and the second page to write-only when a quantity of the specified slots reaches a preset quantity of slots; and
in specified slots of a next round, reading data from the first page through the read control interface, and writing data to the second page through the write control interface;
wherein for each slot in the specified slots, data that is written to the first page and corresponding to the slot comprises N written data units;
before the writing data to the first page, the method further comprises: determining a first column address and a first row address of each of the N written data units on the first page, wherein the first row addresses of the N written data units are different from each other; and
correspondingly, the writing data to the first page specifically comprises: writing the N written data units to the first page based on the first column address and the first row address of each of the N written data units.

9. The method according to claim 8, wherein depths of the first page and the second page are equal.

10. The method according to claim 9, wherein the depths of the first page and the second page are equal to the preset quantity of slots.

11. The method according to any one of claims 8 to 10, wherein the method further comprises:
setting the storage area in the memory, wherein the storage area comprises the first page and the second page.

12. The method according to any one of claims 9 to 10, wherein the depth of the first page corresponds to a number of first column addresses of a RAM block of the storage area and the depth of the second page corresponds to a number of second column addresses of the RAM block of the storage area.

13. The method according to any of claims 8-11, wherein the determining a first column address and a first row address of each of the N written data units on the first page comprises:
for each written data unit, determining, based on a first configuration relationship, an output slot corresponding to the written data unit, wherein the first configuration relationship is used for indicating a relationship between each of the N written data units and the output slot;
determining the first column address of the written data unit on the first page based on the output slot corresponding to the written data unit, the depth of the first page, and a first page indication; and
determining a row address of a storage unit in an idle state of a plurality of storage units that correspond to the first column address corresponding to the written data unit as the first row address corresponding to the written data unit, wherein the first row addresses of the N written data units are different from each other.

14. The method according to any one of claims 8 to 11 or 13, wherein for each slot in the specified slots, data on the second page corresponding to the slot comprises N output data units;
before the reading data from the second page, the method further comprises: determining a second column address shared by the N output data units on the second page; and
correspondingly, the reading data from the second page comprises: reading the N output data units from the second page based on the second column address.

15. A computer-readable storage medium, wherein the computer-readable storage medium stores instructions, and when the instructions are run on a device, the device is enabled to perform the data converging method according to any one of claims 8 to 14.

## Patentansprüche

1. Speichersystem, wobei das Speichersystem eine Steuerlogik (101) sowie eine Schreibsteuerschnittstelle (103) und eine Lesesteuerschnittstelle (104) umfasst, die mit einem Speicher (102) gekoppelt sind,
ein Speicherbereich in dem Speicher eine erste Seite und eine zweite Seite umfasst und die Steuerlogik dazu konfiguriert ist:
die erste Seite auf lesegeschützt und die zweite Seite auf schreibgeschützt festzulegen;
in angegebenen Steckplätzen Daten über die Schreibsteuerschnittstelle auf die erste Seite zu schreiben und Daten von der zweiten Seite über die Lesesteuerschnittstelle zu lesen;
die erste Seite auf schreibgeschützt festzulegen und die zweite Seite auf lesegeschützt festzulegen, wenn eine Anzahl der angegebenen Steckplätze eine vorgegebene Anzahl von Steckplätzen erreicht; und
in angegebenen Steckplätzen einer nächsten Runde Daten von der ersten Seite über die Lesesteuerschnittstelle zu lesen und Daten über die Schreibsteuerschnittstelle auf die zweite Seite zu schreiben;
wobei für jeden Steckplatz in den angegebenen Steckplätzen Daten, die auf die erste Seite geschrieben sind und dem Steckplatz entsprechen, N geschriebene Dateneinheiten umfassen;
die Steuerlogik vor dem Schreiben von Daten auf die erste Seite ferner dazu konfiguriert ist, eine erste Spaltenadresse und eine erste Zeilenadresse jeder der N geschriebenen Dateneinheiten auf der ersten Seite zu bestimmen, wobei sich die ersten Zeilenadressen der N geschriebenen Dateneinheiten voneinander unterscheiden; und
dementsprechend die Steuerlogik speziell dazu konfiguriert ist, die N geschriebenen Dateneinheiten basierend auf der ersten Spaltenadresse und der ersten Zeilenadresse jeder der N geschriebenen Dateneinheiten auf die erste Seite zu schreiben.

2. Speichersystem nach Anspruch 1, wobei die Tiefen der ersten Seite und der zweiten Seite gleich sind.

3. Speichersystem nach Anspruch 2, wobei die Tiefen der ersten Seite und der zweiten Seite gleich der vorgegebenen Anzahl von Steckplätzen sind.

4. Speichersystem nach einem der Ansprüche 1 bis 3, wobei die Steuerlogik ferner dazu konfiguriert ist:
den Speicherbereich in dem Speicher festzulegen, wobei der Speicherbereich die erste Seite und die zweite Seite umfasst.

5. Speichersystem nach einem der Ansprüche 2 bis 3, wobei die Tiefe der ersten Seite einer Anzahl von ersten Spaltenadressen eines RAM-Blocks des Speicherbereichs entspricht und die Tiefe der zweiten Seite einer Anzahl von zweiten Spaltenadressen des RAM-Blocks des Speicherbereichs entspricht.

6. Speichersystem nach einem der Ansprüche 1-4, wobei die Steuerlogik für jede geschriebene Dateneinheit ferner speziell dazu konfiguriert ist:
basierend auf einer ersten Konfigurationsbeziehung einen Ausgabesteckplatz entsprechend der geschriebenen Dateneinheit zu bestimmen, wobei die erste Konfigurationsbeziehung zum Angeben einer Beziehung zwischen jeder der N geschriebenen Dateneinheiten und dem Ausgabesteckplatz verwendet wird;
die erste Spaltenadresse der geschriebenen Dateneinheit auf der ersten Seite basierend auf dem Ausgabesteckplatz entsprechend der geschriebenen Dateneinheit, der Tiefe der ersten Seite und einer ersten Seitenangabe zu bestimmen; und eine Zeilenadresse einer Speichereinheit in einem Ruhezustand einer Vielzahl von Speichereinheiten, die der ersten Spaltenadresse entsprechend der geschriebenen Dateneinheit als die erste Zeilenadresse entsprechend der geschriebenen Dateneinheit entspricht, zu bestimmen, wobei sich die ersten Zeilenadressen der N geschriebenen Dateneinheiten voneinander unterscheiden.

7. Speichersystem nach einem der Ansprüche 1 bis 4 oder 6, wobei Daten auf der zweiten Seite entsprechend dem Steckplatz für jeden Steckplatz in den angegebenen Steckplätzen N Ausgabedateneinheiten umfassen;
die Steuerlogik vor dem Lesen von Daten von der zweiten Seite ferner dazu konfiguriert ist, eine zweite Spaltenadresse zu bestimmen, die durch die N Ausgabedateneinheiten auf der zweiten Seite gemeinsam genutzt wird; und
die Steuerlogik dementsprechend speziell dazu konfiguriert ist, die N Ausgabedateneinheiten von der zweiten Seite basierend auf der zweiten Spaltenadresse zu lesen.

8. Datenkonvergierendes Verfahren, das auf ein Speichersystem angewendet wird, wobei das Speichersystem eine Steuerlogik (101) und eine Schreibsteuerschnittstelle (103) und eine Lesesteuerschnittstelle (104) umfasst, die mit einem Speicher (102) gekoppelt sind, ein Speicherbereich in dem Speicher eine erste Seite und eine zweite Seite umfasst und das Verfahren Folgendes umfasst:
Festlegen der ersten Seite auf lesegeschützt und der zweiten Seite auf schreibgeschützt;
in angegebenen Steckplätzen, Schreiben von Daten über die Schreibsteuerschnittstelle auf die erste Seite und Lesen von Daten von der zweiten Seite über die Lesesteuerschnittstelle;
Festlegen der ersten Seite auf schreibgeschützt und Festlegen der zweiten Seite auf lesegeschützt, wenn eine Anzahl der angegebenen Steckplätze eine vorgegebene Anzahl von Steckplätzen erreicht; und
in angegebenen Steckplätzen einer nächsten Runde, Lesen von Daten von der ersten Seite über die Lesesteuerschnittstelle und Schreiben von Daten über die Schreibsteuerschnittstelle auf die zweite Seite;
wobei für jeden Steckplatz in den angegebenen Steckplätzen die Daten, die auf die erste Seite geschrieben sind und dem Steckplatz entsprechen, N geschriebene Dateneinheiten umfassen;
das Verfahren vor dem Schreiben von Daten auf die erste Seite ferner Folgendes umfasst: Bestimmen einer ersten Spaltenadresse und einer ersten Zeilenadresse jeder der N geschriebenen Dateneinheiten auf der ersten Seite, wobei sich die ersten Zeilenadressen der N geschriebenen Dateneinheiten voneinander unterscheiden; und
das Schreiben von Daten auf die erste Seite dementsprechend spezifisch Folgendes umfasst: Schreiben der N geschriebenen Dateneinheiten auf die erste Seite basierend auf der ersten Spaltenadresse und der ersten Zeilenadresse jeder der N geschriebenen Dateneinheiten.

9. Verfahren nach Anspruch 8, wobei die Tiefen der ersten Seite und der zweiten Seite gleich sind.

10. Verfahren nach Anspruch 9, wobei die Tiefen der ersten Seite und der zweiten Seite gleich der vorgegebenen Anzahl von Steckplätzen sind.

11. Verfahren nach einem der Ansprüche 8 bis 10, wobei das Verfahren ferner Folgendes umfasst:
Festlegen des Speicherbereichs in dem Speicher, wobei der Speicherbereich die erste Seite und die zweite Seite umfasst.

12. Verfahren nach einem der Ansprüche 9 bis 10, wobei die Tiefe der ersten Seite einer Anzahl von ersten Spaltenadressen eines RAM-Blocks des Speicherbereichs entspricht und die Tiefe der zweiten Seite einer Anzahl von zweiten Spaltenadressen des RAM-Blocks des Speicherbereichs entspricht.

13. Verfahren nach einem der Ansprüche 8-11, wobei das Bestimmen einer ersten Spaltenadresse und einer ersten Zeilenadresse jeder der N geschriebenen Dateneinheiten auf der ersten Seite Folgendes umfasst:
für jede geschriebene Dateneinheit, Bestimmen eines Ausgabesteckplatzes entsprechend der geschriebenen Dateneinheit basierend auf einer ersten Konfigurationsbeziehung, wobei die erste Konfigurationsbeziehung zum Angeben einer Beziehung zwischen jeder der N geschriebenen Dateneinheiten und dem Ausgabesteckplatz verwendet wird;
Bestimmen der ersten Spaltenadresse der geschriebenen Dateneinheit auf der ersten Seite basierend auf dem Ausgabesteckplatz entsprechend der geschriebenen Dateneinheit, der Tiefe der ersten Seite und einer ersten Seitenangabe; und
Bestimmen einer Zeilenadresse einer Speichereinheit in einem Ruhezustand einer Vielzahl von Speichereinheiten, die der ersten Spaltenadresse entsprechend der geschriebenen Dateneinheit als erste Zeilenadresse entsprechend der geschriebenen Dateneinheit entspricht, wobei sich die ersten Zeilenadressen der N geschriebenen Dateneinheiten voneinander unterscheiden.

14. Verfahren nach einem der Ansprüche 8 bis 11 oder 13, wobei Daten auf der zweiten Seite entsprechend dem Steckplatz für jeden Steckplatz in den angegebenen Steckplätzen N Ausgabedateneinheiten umfassen;
das Verfahren vor dem Lesen von Daten von der zweiten Seite ferner Folgendes umfasst: Bestimmen einer zweiten Spaltenadresse, die von den N Ausgabedateneinheiten auf der zweiten Seite gemeinsam genutzt wird; und
das Lesen von Daten von der zweiten Seite dementsprechend Folgendes umfasst: Lesen der N Ausgabedateneinheiten von der zweiten Seite basierend auf der zweiten Spaltenadresse.

15. Computerlesbares Speichermedium, wobei das computerlesbare Speichermedium Anweisungen speichert, und wenn die Anweisungen auf einer Vorrichtung ausgeführt werden, die Vorrichtung in die Lage versetzt wird, das Verfahren nach einem der Ansprüche 8 bis 14 durchzuführen.

## Revendications

1. Système de stockage, dans lequel le système de stockage comprend une logique de commande (101), et une interface de commande d'écriture (103) et une interface de commande de lecture (104) qui sont couplées à une mémoire (102),
une zone de stockage dans la mémoire comprend une première page et une seconde page, et la logique de commande est configurée pour :
définir la première page en écriture seule et la seconde page en lecture seule ;
dans des emplacements spécifiés, écrire des données sur la première page via l'interface de commande d'écriture et lire des données de la seconde page via l'interface de commande de lecture ;
définir la première page en lecture seule et la seconde page en écriture seule lorsqu'une quantité d'emplacements spécifiés atteint une quantité prédéfinie d'emplacements ; et
dans les emplacements spécifiés d'un tour suivant, lire des données de la première page via l'interface de commande de lecture et écrire des données sur la seconde page via l'interface de commande d'écriture ;
dans lequel pour chaque emplacement dans les emplacements spécifiés, les données qui sont écrites sur la première page et correspondant à l'emplacement comprennent N unités de données écrites ;
avant d'écrire des données sur la première page, la logique de commande est en outre configurée pour déterminer une première adresse de colonne et une première adresse de ligne de chacune des N unités de données écrites sur la première page, dans lequel les premières adresses de ligne des N unités de données écrites sont différentes les unes des autres ; et
de manière correspondante, la logique de commande est spécifiquement configurée pour écrire les N unités de données écrites sur la première page sur la base de la première adresse de colonne et de la première adresse de ligne de chacune des N unités de données écrites.

2. Système de stockage selon la revendication 1, dans lequel les profondeurs de la première page et de la seconde page sont égales.

3. Système de stockage selon la revendication 2, dans lequel les profondeurs de la première page et de la seconde page sont égales à la quantité prédéfinie d'emplacements.

4. Système de stockage selon l'une quelconque des revendications 1 à 3, dans lequel la logique de commande est en outre configurée pour :
définir la zone de stockage dans la mémoire, dans lequel la zone de stockage comprend la première page et la seconde page.

5. Système de stockage selon l'une quelconque des revendications 2 et 3, dans lequel la profondeur de la première page correspond à un nombre de premières adresses de colonnes d'un bloc RAM de la zone de stockage et la profondeur de la seconde page correspond à un nombre de secondes adresses de colonnes d'un bloc RAM de la zone de stockage.

6. Système de stockage selon l'une quelconque des revendications 1 à 4, dans lequel pour chaque unité de données écrites, la logique de commande est en outre spécifiquement configurée pour :
déterminer, sur la base d'une première relation de configuration, un emplacement de sortie correspondant à l'unité de données écrites, dans lequel la première relation de configuration est utilisée pour indiquer une relation entre chacune des N unités de données écrites et l'emplacement de sortie ;
déterminer la première adresse de colonne de l'unité de données écrites sur la première page sur la base de l'emplacement de sortie correspondant à l'unité de données écrites, de la profondeur de la première page et d'une première indication de page ; et
déterminer une adresse de ligne d'une unité de stockage dans un état inactif d'une pluralité d'unités de stockage qui correspond à la première adresse de colonne correspondant à l'unité de données écrites en tant que première adresse de ligne correspondant à l'unité de données écrites, dans lequel les premières adresses de lignes des N unités de données écrites sont différentes les unes des autres.

7. Système de stockage selon l'une quelconque des revendications 1 à 4 ou 6, dans lequel pour chaque emplacement dans les emplacements spécifiés, les données sur la seconde page correspondant à l'emplacement comprennent N unités de données de sortie ;
avant de lire les données de la seconde page, la logique de commande est en outre configurée pour déterminer une seconde adresse de colonne partagée par les N unités de données de sortie sur la seconde page ; et
de manière correspondante, la logique de commande est spécifiquement configurée pour lire les N unités de données de sortie à partir de la seconde page sur la base de la seconde adresse de colonne.

8. Procédé de convergence de données, appliqué à un système de stockage, dans lequel le système de stockage comprend une logique de commande (101) et une interface de commande d'écriture (103) et une interface de commande de lecture (104) qui sont couplées à une mémoire (102), une zone de stockage dans la mémoire comprend une première page et une seconde page, et le procédé comprend :
la définition de la première page en écriture seule et de la seconde page en lecture seule ;
dans les emplacements spécifiés, l'écriture de données sur la première page via l'interface de commande d'écriture et la lecture de données de la seconde page via l'interface de commande de lecture ;
la définition de la première page en lecture seule et de la seconde page en écriture seule lorsqu'une quantité d'emplacements spécifiés atteint une quantité prédéfinie d'emplacements ; et
dans les emplacements spécifiés d'un tour suivant, la lecture de données de la première page via l'interface de commande de lecture et l'écriture de données sur la seconde page via l'interface de commande d'écriture ;
dans lequel pour chaque emplacement dans les emplacements spécifiés, les données qui sont écrites sur la première page et correspondant à l'emplacement comprennent N unités de données écrites ;
avant d'écrire des données sur la première page, le procédé comprend en outre : la détermination d'une première adresse de colonne et d'une première adresse de ligne de chacune des N unités de données écrites sur la première page, dans lequel les premières adresses de ligne des N unités de données écrites sont différentes les unes des autres ; et
de manière correspondante, l'écriture de données sur la première page comprend spécifiquement : l'écriture des N unités de données écrites sur la première page sur la base de la première adresse de colonne et de la première adresse de ligne de chacune des N unités de données écrites.

9. Procédé selon la revendication 8, dans lequel les profondeurs de la première page et de la seconde page sont égales.

10. Procédé selon la revendication 9, dans lequel les profondeurs de la première page et de la seconde page sont égales à la quantité prédéfinie d'emplacements.

11. Procédé selon l'une quelconque des revendications 8 à 10, dans lequel le procédé comprend en outre :
la définition de la zone de stockage dans la mémoire, dans lequel la zone de stockage comprend la première page et la seconde page.

12. Procédé selon l'une quelconque des revendications 9 et 10, dans lequel la profondeur de la première page correspond à un nombre de premières adresses de colonnes d'un bloc RAM de la zone de stockage et la profondeur de la seconde page correspond à un nombre de secondes adresses de colonnes du bloc RAM de la zone de stockage.

13. Procédé selon l'une quelconque des revendications 8 à 11, dans lequel la détermination d'une première adresse de colonne et d'une première adresse de ligne de chacune des N unités de données écrites sur la première page comprend :
pour chaque unité de données écrites, la détermination, sur la base d'une première relation de configuration, d'un emplacement de sortie correspondant à l'unité de données écrites, dans lequel la première relation de configuration est utilisée pour indiquer une relation entre chacune des N unités de données écrites et l'emplacement de sortie ;
la détermination de la première adresse de colonne de l'unité de données écrites sur la première page sur la base de l'emplacement de sortie correspondant à l'unité de données écrites, de la profondeur de la première page et d'une première indication de page ; et
la détermination d'une adresse de ligne d'une unité de stockage dans un état inactif d'une pluralité d'unités de stockage qui correspondent à la première adresse de colonne correspondant à l'unité de données écrites en tant que première adresse de ligne correspondant à l'unité de données écrites, dans lequel les premières adresses de lignes des N unités de données écrites sont différentes les unes des autres.

14. Procédé selon l'une quelconque des revendications 8 à 11 ou 13, dans lequel pour chaque emplacement dans les emplacements spécifiés, les données sur la seconde page correspondant à l'emplacement comprennent N unités de données de sortie ;
avant la lecture des données de la seconde page, le procédé comprend en outre : la détermination d'une seconde adresse de colonne partagée par les N unités de données de sortie sur la seconde page ; et
de manière correspondante, la lecture des données de la seconde page comprend : la lecture des N unités de données de sortie de la seconde page sur la base de la seconde adresse de colonne.

15. Support de stockage lisible par ordinateur, dans lequel le support de stockage lisible par ordinateur stocke des instructions, et lorsque les instructions sont exécutées sur un dispositif, le dispositif est activé pour exécuter le procédé de convergence des données selon l'une quelconque des revendications 8 à 14.
